(19) Europäisches Patentamt
European Patent Office
Office européen des brevets

(11) **EP 4 448 605 B1**

(12) **EUROPEAN PATENT SPECIFICATION**

(45) Date of publication and mention
of the grant of the patent:
**19.11.2025 Bulletin 2025/47**

(21) Application number: **22830507.4**

(22) Date of filing: **06.12.2022**

(51) International Patent Classification (IPC):
*C08G 18/00* (2006.01)      *C08G 18/71* (2006.01)
*C08G 18/76* (2006.01)

(52) Cooperative Patent Classification (CPC):
**C08G 18/003; C08G 18/71; C08G 18/7671**

(86) International application number:
**PCT/EP2022/084521**

(87) International publication number:
**WO 2023/110515 (22.06.2023 Gazette 2023/25)**

(54) **PROCESS FOR THE PRODUCTION OF A THERMOPLASTIC POLYOXAZOLIDINONE**

VERFAHREN ZUR HERSTELLUNG EINES THERMOPLASTISCHEN POLYOXAZOLIDINONS

PROCÉDÉ DE PRODUCTION D'UNE POLYOXAZOLIDINONE THERMOPLASTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.12.2021 EP 21214202**

(43) Date of publication of application:
**23.10.2024 Bulletin 2024/43**

(73) Proprietor: **Covestro Deutschland AG
51373 Leverkusen (DE)**

(72) Inventors:
• **MOVAHHED, Sohajl
50829 Köln (DE)**
• **WESTHUES, Stefan
51379 Leverkusen (DE)**
• **THIEL, Daniel
51375 Leverkusen (DE)**
• **WOLF, Aurel
42489 Wülfrath (DE)**
• **LAEMMERHOLD, Kai
51519 Odenthal (DE)**
• **GUERTLER, Christoph
50735 Köln (DE)**
• **SCHMIDT, Gudrun
51381 Leverkusen (DE)**
• **KOENIG, Thomas
51375 Leverkusen (DE)**
• **ENGBERG, Roland
40591 Düsseldorf (DE)**

(74) Representative: **Levpat
c/o Covestro AG
Gebäude K12
51365 Leverkusen (DE)**

(56) References cited:
**EP-A1- 3 750 933**

**Description**

The invention is related to a process, preferably a continuous process, for producing a thermoplastic polyoxazolidinone comprising copolymerizing a diisocyanate compound with a bisepoxide compound in the presence of a catalyst in a reactor; wherein the diisocyanate compound and the bisepoxide compound are continuously and/or step-wise added preferably continuously added to the reactor and the polyoxazolidinone is continuously and/or step-wise, preferably continuously removed from the reactor.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

The scientific publication J. Polym. Sci. 8 (1970) 2759-2773 discloses a discontinuous process for the preparation of polyoxazolidinones from various bisepoxides and various diisocyanates in the presence of alkaline metal halogenide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction. The addition of monofunctional chain-group regulators is not disclosed.

WO 2015/173110 A1 and WO 2016/128380 A1 disclose a discontinuous process for the production of a polyoxazolidinone by reaction of a diisocyanate, a bisepoxide and a monofunctional isocyanate in the presence of a phoshonium based catalyst and N-Methylpyrrolidone as high boiling solvent.

WO 2019/052991 A1 and WO 2019/052994 A1 disclose discontinuous processes for producing thermoplastic polyoxazolidinone comprising copolymerization of a diisocyanate compound with a bisepoxide compound and a monofunctional epoxide in the presence of Lithium chloride and Lithium bromide as catalysts in N-Methylpyrrolidone and sulfolane as high boiling co-solvents.

WO 2018/149844 A1 disclose a discontinuous process for the production of a polyoxazolidinone by reaction of a diisocyanate and a bisepoxide using an ionic liquid as a catalyst in sulfolane as a high boiling co-solvent. The use of a monofunctional epoxide in addition to the bisepoxide is not disclosed. The resulting oxazolidinone product contains significant amounts of the isocyanurate by trimerization of the diisocyanate as a second product with an oxazolidinone to isocyanurate ratio of 0.62 to 0.71 determined by IR spectroscopy.

WO 2020/016276 A1 and WO2019/063391 A1 discloses discontinuous processes for the production of a polyoxazolidinone by a solvent-free or a solvent-based copolymerisation of a diisocyanate and a bisepoxide using an ionic liquid as a catalyst, wherein a reaction time of the copolymerization process of 60 min or longer are applied.

Objective of the present invention was therefore to identify an optimized and simple process for the preparation of thermoplastic polyoxazolidinones with a reduced discoloration, wherein the reduced discoloration of the polyoxazolidinone product is technically favourable for comprehensive optical applications e.g. as lenses, lighting, or more general glass replacement. An further objective is the provision of an improved process, wherein the reaction time of the copolymerization is reduced, to increase the space-time yield that enhance the process efficiency compared to known processes for the preparation of thermoplastic polyoxazolidinones. In particular, suitable process conditions should be developed to obtain a polyoxazolidinone product with a high chemical selectivity and reducing the amount of unwanted side products like isocyanurates that causes unwanted cross-linking of the reaction product and negatively impact the thermoplastic properties. Thus, a high oxazolidinone to isocyanurate ratio is desirable to gain good thermoplastic properties for the subsequent shaping processes.

Surprisingly, it has been found that the problem can be solved by a process, preferably a continuous process, for producing a thermoplastic polyoxazolidinone (1) comprising copolymerizing a diisocyanate compound (A) with a bisepoxide compound (B) in the presence of a catalyst (C) in a reactor; wherein the diisocyanate compound (A) and the bisepoxide compound (B) are continuously and/or step-wise added preferably continuously added to the reactor and the polyoxazolidinone is continuously and/or step-wise, preferably continuously removed from the reactor.

As used herein, the term "thermoplastic polyoxazolidinone" is meant to denote compounds containing at least two oxazolidinone groups in the molecule. The thermoplastic polyoxazolidinone are obtainable by the reaction of a diisocyanate compound with a bisepoxide compound.

In alignment with general knowledge a continuous addition of the diisocyanate compound (A) and the bisepoxide compound (B) during the copolymerizing process is understood to mean that the mass flow rate of the diisocyanate compound (A) and the bisepoxide compound (B) is maintained higher than 0 g/ min during the copolymerizing process. However, the mass flow rate of the diisocyanate compound (A) and/or the bisepoxide compound (B) can be constant, increase or decrease during the copolymerizing process. Similarly, the thermoplastic polyoxazolidinone (1) as the copolymerization product of the diisocyanate compound (A) and the bisepoxide compound (B) can be continuously removed from the reactor, which is understood to mean that the mass flow rate of this product is maintained higher than 0 g/ min during the copolymerizing process. It should be noted, that the mass flow rate of the removal of the polyoxazolidinone (1) can be constant, increase or decrease.

In alignment with general knowledge a step-wise addition of the diisocyanate compound (A) and the bisepoxide compound (B) is understood that the volume and also the mass flow rate of the diisocyanate compound (A) and the bisepoxide compound (B) is at least once preferably at least twice interrupted during the copolymerizing process, wherein this interruption is characterized that the mass flow rate of the diisocyanate compound (A) and the bisepoxide compound (B) is 0 g/ min. Similarly, the thermoplastic polyoxazolidinone (1) as the copolymerization product of the diisocyanate compound (A) and the bisepoxide compound (B) can be step-wise removed from the reactor, wherein the mass flow is interrupted at least once preferably at least twice during the copolymerizing process. The mass flow rate is 0 g/ min during this interruption of the product removal. The continuous and step-wise addition can be also combined meaning that the diisocyanate compound (A) and the bisepoxide compound (B) is dosed in at least two distinct dosage regimes, separated by at least one interruption of the mass flow of that the diisocyanate compound (A) and the bisepoxide compound (B). Within each dosage regime the diisocyanate compound (A) and the bisepoxide compound (B) is continuously added. The similar logics also applies for the combination of a continuous and step-wise removal of the thermoplastic polyoxazolidinone (1).

In an preferred embodiment of the method according to the invention the diisocyanate compound (A) and the bisepoxide compound (B) are continuously added to the reactor and the polyoxazolidinone is continuously removed from the reactor during the copolymerization resulting in a continuous process for producing the thermoplastic polyoxazolidinone (1).

Two or more embodiments of the of the method according to the invention can be combined in each combination, unless their technical content teaches the contrary.

As used herein, the term "diisocyanate compound (A)" is meant to denote diisocyanate compounds having two isocyanate groups (I = 2), isocyanate-terminated biurets, isocyanurates, uretdiones, carbamates and / or isocyanate-terminated prepolymers.

In an embodiment of the method according to the invention the diisocyanate compound (A) is at least one compound selected from the group consisting of tetramethylene diisocyanate, hexamethylene diisocyanate (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-$\alpha$,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) $\alpha,\omega$-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and $\alpha,\alpha,\alpha',\alpha'$-tetramethyl- m- or -p-xylene diisocyanate (TMXDI) and biurets, isocyanurates, carbamates and uretdiones of the aforementioned isocyanates.

More preferred the diisocyanate compound (A) is selected from the group comprising of tolylene-$\alpha$,4-diisocyanate, poly(propylene glycol) tolylene-2,4-diisocyanate terminated, 2,4,6-trimethyl-1,3-phenylene diisocyanate, 4-chloro-6-methyl-1,3-phenylene diisocyanate, 3,3'-dimethyl-4,4'-biphenylene diisocyanate, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and $\alpha,\alpha,\alpha',\alpha'$-tetramethyl- m- or -p-xylene diisocyanate (TMXDI), diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

And most preferred the diisocyanate compound (A) is selected from the group consisting of diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

In a further preferred embodiment of the invention the diisocyanate compound (A) is added in at least two preferably portions (A-1) and (A-2). The molar ratio of (A-2) is from 5 mol-% to 60-mol-%, preferably from 10 mol-% to 50-mol-%, with related to the sum of the molar ratio of (A-1) and (A-2).

In a further preferred embodiment the second portion (A-2) of the diisocyanate compound (A) is added in step (beta) to the mixture (alpha) or the second portion (A-2) of the diisocyanate compound (A) and the monofunctional isocyanate to the bisepoxide compound (B) of step (gamma) and copolymerized in the reactor.

A mixture of two or more of the aforementioned diisocyanate compounds (A) can also be used.

As used herein, the term "bisepoxide compound (B)" is meant to denote diepoxide compounds having two epoxide groups (F = 2).

In a preferred embodiment of the invention the bisepoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

More preferred the bisepoxide compound (B) is selected from the group consisting of resorcinol diglycidyl ether, bisphenol A diglycidyl ether, and bisphenol F diglycidyl ether.

Most preferred the bisepoxide compound (B) is selected from the group consisting of bisphenol A diglycidyl ether, and bisphenol F diglycidyl ether.

In a preferred embodiment of the invention the bisepoxide compound (B) comprises an epoxy-terminated oxazolidinone-based prepolymer, wherein this epoxy-terminated oxazolidinone-based prepolymer leads to a higher space time yield in the copolymerization process, preferably the continuous copolymerization process, for producing the thermoplastic polyoxazolidinone (1).

In a more preferred embodiment the bisepoxide compound (B). consists of $\geq$90 mol-%, preferably of $\geq$95 mol-% more preferably of $\geq$98 mol-% the epoxy-terminated oxazolidinone-based prepolymer.

In a preferred embodiment of the invention the epoxy-terminated oxazolidinone-based prepolymer is the copolymerization reaction product of a first portion (A-1) of the diisocyanate compound (A) with the bisepoxide compound (B) in the presence of a first portion (C-1) of the catalyst (C), wherein the molar ratio of the epoxy groups of the polyepoxide compound (B) to the isocyanate groups of the first portion (A-1) of the polyisocyanate compound (A) is from 1.1:1 to less than 25:1 preferably from 1.2:1 and less than 3:1. This leads to an even higher space time yield in the copolymerization process, preferably the continuous copolymerization process, for producing the thermoplastic polyoxazolidinone (1).

In a preferred embodiment of the invention the epoxy-terminated oxazolidinone-based prepolymer is formed in the absence of a solvent (E). Thus, no solvent (E) need to be remove by a time and energy intensive separation process, e.g. distillation process. Furthermore, also the overall solvent amount for the production of the thermoplastic polyoxazolidinone can be reduced or preferably a solvent can avoided.

In a less-preferred embodiment of the invention, the process for the preparation of the epoxy-terminated oxazolidinone-based prepolymer comprises the steps:

i) Mixing the first portion (A-1) of the diisocyanate compound (A) with the bisepoxide compound (B) and the first catalyst portion (C-1) of the catalyst (C) forming a mixture (i);

ii) Copolymerizing the mixture (i)

In an more-preferred embodiment of the invention, the process for the preparation of the epoxy-terminated oxazolidinone-based prepolymer comprises the steps:

a) Mixing the polyepoxide compound (B) and the first catalyst portion (C-1) of the catalyst (C) forming a mixture (a);

b) Addition of the first portion (A-1) of the diisocyanate compound (A) to the mixture (a) at copolymerization conditions.

A mixture of two or more of the aforementioned bisepoxide compounds (B), two or more of the aforementioned epoxy-terminated oxazolidinone-based prepolymer can also be used. Also a mixture of the aforementioned bisepoxide compounds (B) and the epoxy-terminated oxazolidinone-based prepolymer can also be used.

The molecular weight of the obtained thermoplastic polyoxazolidinone is determined by the molar ratio of the bisepoxide compound (B) relative to diisocyanate compound (A) and optionally relative to the compound (D).

The molar ratio of bisepoxide compound (B) to diisocyanate compound (A) is preferably in the range from 1:2 to 2:1, more preferably in the range from 45:55 to 2:1 and even more preferably in the range 47.8:52.2 to 52.2:47.8.

When the diisocyanate compound (A) is employed in excess, preferably a mono-epoxide is employed as compound (D). When the bisepoxide compound (B) is employed in excess, preferably a mono-isocyanate is employed as compound (D).

In an embodiment of the invention the catalyst (C) comprises at least one of a tetraalkylphosphonium halogenide, a tetracycloalkylphosphonium halogenide, a tetraarylphosphonium halogenide, a tetraalkylammonium halogenide, a tetracycloalkylammonium halogenide, and/or a tetraarylammonium halogenide, preferred a tetraalkylphosphonium halogenide, a tetracycloalkylphosphonium halogenide, and a tetraarylphosphonium halogenide.

In a preferred embodiment of the invention the catalyst (C) is at least one compound selected from the group consisting of tetramethylammonium bromide, tetraethylammonium bromide, tetrapropylammonium bromide, tetrabutylammonium bromide, tetrapentylammonium bromide, , tetrahexylammonium bromide, , tetraheptylammonium bromide, , tetraoctylammonium bromide, tetramethylammonium chloride, tetraethylammonium chloride, tetrapropylammonium chloride, tetrabutylammonium chloride, tetrapentylammonium chloride, , tetrahexylammonium chloride, , tetraheptylammonium chloride, tetraoctylammonium chloride, tetraphenylphosphonium chloride, tetraphenylphosphonium bromide, tetraphenylphosphonium iodide, bis(triphenylphosphine)iminium chloride, tetraphenylphosphonium nitrate, ,tetraphenylphosphonium carbonate and compounds represented by the formula (I)

$$[A]_n{}^+[Y]^{n-} \qquad (I)$$

wherein $[A]_n{}^+$ is at least one compound selected from the group consisting of *p*-phenoltriphenyl-phosphonium; p-phenoltriphenyl-ammonium; p-chlorobenzene triphenyl-phosphonium; ethylammonium; methyltrioctyl-ammonium; cholin; 1-allyl-3-methyl- imidazolium; 1-butyl-2,3-dimethyl- imidazolium; 1-butyl-3-methyl- imidazolium; 1,2-dimethyl-3-propyl- imidazolium; 1,3-dimethyl- imidazolium; 1-ethyl-3-methyl- imidazolium; 1-hexadecyl-3-methyl-imidazolium; 1-hexyl-3-methyl- imidazolium; 1-methyl-3-octyl- imidazolium;1-methyl-3-propyl- imidazolium; trihexyltetradecyl- phosphonium; 1-methyl-1-propyl piperidinium; 1-butyl-pyridinium; 1-butyl-3-methyl-pyridinium; 1-butyl-4-methyl- pyridinium; 1-butyl-1-methyl- pyrrolidinium; 1-methyl-1-propyl- pyrrolidinium; triethyl-sulfonium

wherein $[Y]^{n-}$ is at least one compound selected from the group consisting of bis(trifluoromethylsulfonyl)imide; iodide; bromide; chloride; dicyanamide; diethyl phosphate; dihydrogen phosphate; dimethyl phosphate; ethyl sulfate; hexafluorophosphate; hydrogensulfate; nitrate; tetrafluoroborate; thiocyanate; triflate.

In a more preferred embodiment of the invention the catalyst (C) is at least one compound selected from the group consisting of tetramethylammonium bromide, tetraethylammonium bromide, tetrapropylammonium bromide, tetrabutylammonium bromide, tetrapentylammonium bromide, , tetrahexylammonium bromide, , tetraheptylammonium bromide, , tetraoctylammonium bromide, tetramethylammonium chloride, tetraethylammonium chloride, tetrapropylammonium chloride, tetrabutylammonium chloride, tetrapentylammonium chloride, , tetrahexylammonium chloride, , tetraheptylammonium chloride, tetraoctylammonium chloride, tetraphenylphosphonium chloride, tetraphenylphosphonium bromide, tetraphenylphosphonium iodide, bis(triphenylphosphine)iminium chloride, tetraphenylphosphonium nitrate, tetraphenylphosphonium carbonate.

In an even more preferred embodiment of the invention the catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, tetraphenylphosphonium carbonate.

In a most preferred embodiment of the invention the catalyst (C) is at least one compound selected from the group consisting of tetraphenylphosphonium chloride, tetraphenylphosphonium bromide and tetraphenylphosphonium iodide.

In a preferred embodiment of the invention the catalyst (C) is added in at least two portions comprising a first portion (C-1) and a second portion (C-2).

In a preferred embodiment of the invention the first portion (C-1) of the catalyst (C) is applied for the synthesis of the epoxy-terminated oxazolidinone-based prepolymer.

In a preferred embodiment of the invention the second portion (C-2) of the catalyst (C) is mixed with the bisepoxide compound (B) the compound (D) in the reactor to provide a mixture (alpha) or the bisepoxide compound in step (gamma), wherein the second portion (C-2) of the catalyst (C) leads to an improved reactivity of the reaction of the diisocyanate compound (A) with the bisepoxide compound (B) and preferably the compound (D) within the copolymerization process, preferably the continuous copolymerization process for the preparation of the thermoplastic polyoxazolidinone (1).

In a preferred embodiment of the invention the molar ratio of the first portion (C-1) of the catalyst (C) to the second portion (C-2) of the catalyst (C) is from 0.05:1 to 1:3 preferred 0.2:1 to 1:2.

In one embodiment of the method according to the invention, the catalyst (C) is present in an amount of $\geq 0.001$ to $\leq 5.0$ weight-%, preferably in an amount of $\geq 0.01$ to $\leq 3.0$ weight-%, more preferred $\geq 0.05$ to $\leq 2.0$ weight-%, based on the theoretical yield of thermoplastic polyoxazolidinone.

In an embodiment of the invention the copolymerization is in the presence of a compound (D), wherein the compound (D) comprises at least one of a monofunctional isocyanate, a monofunctional epoxide, a cyclic carbonate, a monofunctional alcohol, and a monofunctional amine, preferably a monofunctional epoxide and monofunctional isocyanate and most preferred monofunctional isocyanate. The compound (D) acts as a chain regulator for the thermoplastic polyoxazolidinone and further increases the thermal stability of the thermoplastic polyoxazolidinone.

In an embodiment of the invention the compound (D) is a branched, an unbranched aliphatic, an alicyclic and/or an aromatic monofunctional alcohol.

Suitable monofunctional alcohols are for example linear primary alcohols such as methanol, ethanol, propanol, n-butanol, n-pentanol, n-hexanol, n-heptanol, n-octanol, n-nonanol, n-decanol, n-dodecanol, n- tetradecanol, n-hexadecanol, n-octadecanol and n-eicosanol. Suitable branched primary monofunctional alcohols are for example isobutanol, isopentanol, isohexanol, isooctanol, isostearyl alcohol and iso-palmityl alcohol, 2-ethylhexyl alcohol, 3-n-propyl heptyl alcohol, 2-n-propyl heptyl alcohol, and 3- isopropyl heptyl alcohol. Suitable secondary monofunctional alcohols are for example isopropanol, sec-butanol, sec-pentanol (pentane- 2-ol), pentane-3-ol, cyclopentanol, cyclohexanol, sec-hexanol (hexane- 2-ol), hexane-3-ol, sec- heptanol (heptane-2-ol), heptane-3-ol, sec-decanol and decan-3-ol.Examples of suitable tertiary monofunctional alcohols are tert-butanol and tert-amyl alcohol.

Aromatic monofunctional alcohols such as phenol, cresol, thymol, benzyl alcohol and 2-phenylethanol can also be used.

In a further embodiment of the invention the compound (D) is a branched, an unbranched aliphatic, a alicyclic and/or an aromatic monofunctional isocyanate.

Suitable monofunctional isocyanates are for example n-hexylisocyanate, cyclohexyl isocyanate, $\omega$-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3 - (2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentyl-phenyl isocyanate, 4-t-butyl phenyl isocyanate, 1-naphthyl isocyanat

In an embodiment of the invention the compound (D) is a branched, anunbranched aliphatic, an alicyclic and/or an aromatic monofunctional amine. Specific examples of the aliphatic monofunctional amine include hexylamine, heptylamine, octylamine, nonylamine, decylamine, undecylamine, dodecylamine, tridecylamine, tetradecylamine, pentadecylamine, hexadecylamine, heptadecyl. Examples include amine, octadecylamine, nonadecylamine, icosylamine, henecosylamine, docosylamin. Specific examples of the alicyclic monofunctional amine include cyclohexylamine, 2-methylcyclohexylamine, 3-methylcyclohexylamine, 4-methylcyclohexylamine, 2,3-dimethylcyclohexylamine, 2,4-dimethylcyclohexylamine, 2-ethylcyclohexylamine, 3-ethylcyclohexylamine, 4-ethylcyclohexylamine, 2-n-propylcyclohexylamine, 3-n-propylcyclohexylamine, 4-n-propylcyclohexylamine, 2-iso-propylcyclohexylamine, 3-iso-propylcyclohexylamine, 4-iso-propylcyclohexylamine, 2-n-butylcyclohexylamine, 3-n-butylcyclohexylamine, 4-n-butylcyclohexyl Silamine, 2-iso-butylcyclohexylamine, 3-iso-butylcyclohexylamine, 4-iso-butylcyclohexylamine, 2-tert-butylcyclohexylamine, 3-tert-butylcyclohexylamine, 4-tert-butylcyclohexylamine, 2-n-octylcyclohexylamine, 3-n-octylcyclohexylamine, 4-n-octylcyclohexylamine, cyclohexylmethylamine, 2-methylcyclohexylmethylamine, 3-methylcyclohexylmethylamine, 4-methylcyclohexylmethylamine, dimethyl Cyclohexylmethylamine, trimethylcyclohexylmethylamine, methoxycyclohexylmethylamine, ethoxycyclohexylmethylamine, dimethyl Carboxymethyl cyclohexylmethyl amine, methoxy cyclohexylethylamine, dimethoxy cyclohexylethylamine, methylcyclohexylamine propylamine, dodecylamine cyclohexylamine.

Specific examples of the aromatic monofunctional amine include aniline, 1-naphthylamine, 2-naphthylamine, 1-aminoanthracene, o-toluidine, p-toluidine, m-toluidine, 2-ethylaniline, 3-ethylaniline, 4 -Ethylaniline, 2-propylaniline, 3-propylaniline, 4-propylaniline, cumidine, 2-n-butylaniline, 3-n-butylaniline, 4-n-butylaniline, 2-isobutylaniline, 3-isobutyl Aniline, 4-isobutylaniline, 2-sec-butylaniline, 3-sec-butylaniline, 4-sec-butylaniline, 2-tert-butylaniline, 3-tert-butylaniline, 4-tert-butylaniline, 2 -N-pentylaniline, 3-n-pentylaniline 4-n-pentylaniline, 2-isopentylaniline, 3-isopentylaniline, 4-isopentylaniline, 2-sec-pentylaniline, 3-sec-pentylaniline, 4-sec-pentylaniline, 2-tert -Pentylaniline, 3-tert-pentylaniline, 4-tert-pentylaniline, 2-hexylaniline, 3-hexylaniline, 4-hexylaniline, 2-heptylaniline, 3-heptylaniline, 4-heptylaniline, 2- Octylaniline, 3-octylaniline, 4-octylaniline, 2-nonylaniline, 3-nonylaniline, 4-nonylaniline, 2-decylaniline, 3-decylaniline, 4-decylaniline, cyclohexylaniline, diphenylamine, dimethylaniline , Diethylaniline, dipropylaniline, diisopropylaniline, di-n-butylaniline, di-sec-butylaniline, di-tert-butylaniline, trimethylaniline, triethylaniline, tripropylaniline, tri-tert-butylaniline, Anisidine, ethoxyaniline, dimethoxyaniline, diethoxyaniline, trimethoxyaniline, tri-n-butoxyaniline, benzylamine, methylbenzylamine, dimethylbenzylamine, trimethylbenzylamine, methoxybenzylamine, ethoxybenzylamine, dimethoxybenzylamine, $\alpha$-phenylethylamine, $\beta$-phenylethylamine, methoxyphenylethylamine, dimethoxyphenylethylamine, $\alpha$-phenylpropylamine, $\beta$ Phenylpropylamine, .gamma. phenylpropylamine, methyl phenylpropylamine.

In an embodiment of the invention the compound (D) is at least one compound selected from the group consisting of 4-phenyl-1,3-dioxolan-2-one (styrene carbonate), 1,3-dioxolan-2-one (ethylene carbonate), 4-Methyl-1,3-dioxolan-2-one (propylene carbonate).

EP 4 448 605 B1

In a preferred embodiment of the invention the compound (D) is at least one compound selected from the group consisting of phenyl glycidyl ether, o-cresyl glycidyl ether, m-cresyl glycidyl ether, p-cresyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide, butadiene monoepoxide, N-glycidyl phthalimide, para-tolyl isocyanate, and 4-tert-butylphenyl glycidyl ether.

In a preferred embodiment of the invention the compound (D) is para-tolyisocyanate, 4-tert-butylphenyl glycidyl ether and/or phenyl glycidyl ether and/or o-cresyl glycidyl ether and/or styrene oxide.

In a more preferred embodiment of the invention the compound (D) is 4-tert-butylphenyl glycidyl ether and/or para-tolyisocyanate.

In a most preferred embodiment of the invention the compound (D) is para-tolyisocyanate.

In an embodiment of the method according to the invention, the compound (D) is present in an amount of $\geq 0.1$ to $\leq 7.0$ weight-%, preferably in an amount of $\geq 0.2$ to $\leq 5.0$ weight-%, more preferred $\geq 0.5$ to $\leq 3.0$ weight-%, based on the theoretical yield of thermoplastic polyoxazolidinone.

In an embodiment of the invention the compound (D) is added prior and/or during preferably prior the copolymerization.

In an preferred embodiment of the invention the compound (D) is added to the diisocyanate compound (A) and/or to the bisepoxide compound (B) preferably to the diisocyanate compound (A) prior the copolymerization. Due to the premixing process of the compound (D) and the diisocyanate compound (A) and/or to the bisepoxide compound (B) prior the copolymerization technically challenging mixing and inhomogenities of the reaction mixture during the copolymerization can be reduced.

In an more preferred embodiment of the invention the compound (D) comprises a monofunctional epoxide and is added a to the bisepoxide compound (B) prior the copolymerization. Due to the similar chemical functionality of the bisepoxide compound (B) and the compound (D) comprising a monofunctional epoxide the storage stability of this mixture is increased.

In an alternative, more preferred embodiment of the invention the compound (D) comprises a monofunctional isocyanate and is added a to the diisocyanate compound (A) prior the copolymerization. Due to the similar chemical functionality of the diisocyanate compound (A) and the compound (D) comprising a monofunctional isocyanate the storage stability of this mixture is increased. In addition, the addition of the monofunctional isocyanate to the diisocyanate compound (A) leads to a thermoplastic polyoxazolidinone (1) with a reduced discoloration.

In an embodiment of the invention the continuous copolymerization process is absence of a solvent (E). Such solvents (E) includes for example cyclic carbonate, such as ethylencarbonate or propylencarbonate, *N*-methylpyrrolidone (NMP) and sulfolane but also dichlorobenzene, dimethylformamide, N,N-dimethylacetamide, tetrahydrofurane, acetone, methyl ethyl ketone, 1,2-Dimethoxyethane, 1-Methoxy-2-(2-methoxyethoxy)ethane, the different isomers of dioxane. The absence of this additional solvent (E) reduces the energy-intensive and time-consuming removal process, e.g. distillation, of this solvents and reduces undesirable colouring/disoloration (Gardner Colour) of the polyoxazolidinone copolymerization product. In addition, the absence of high amounts of the solvent (E) avoids or at least reduces the negative impact of polyoxazolidinones with residual amounts of the solvent (E) in subsequent extrusion and injection molding processes of the, such as unwanted foaming, unsuitable viscosity and explosive atmosphere.

In the absence of an additional solvent (E) means solvent amounts of (E) of less than 5 wt-% preferably 4 wt-% more preferably 2 wt-%.

In a preferred embodiment of the invention the bisepoxide compound (B) comprises an epoxy-terminated oxazolidinone-based prepolymer, wherein invention the epoxy-terminated oxazolidinone-based prepolymer is formed in the absence of the solvent (E) and also the continuous copolymerization process is absence of a solvent (E).

In an embodiment of the invention the copolymerization comprises

(alpha) Mixing the bisepoxide compound (B) and the monofunctional epoxide to provide a mixture (alpha),
(beta) Adding a second portion (A-2) of the diisocyanate compound (A) to the mixture (alpha) and copolymerizing the mixture in the reactor.

In an alternative embodiment of the invention the copolymerization comprises

(gamma) Providing the bisepoxide compound (B),

(delta) Adding a second portion (A-2) of the diisocyanate compound (A) and the monofunctional isocyanate to the

7

bisepoxide compound (B) of step (gamma) and copolymerizing the mixture in the reactor.

In a preferred embodiment of the invention the mixture (alpha) or the bisepoxide compound (B) in step (gamma) comprises a second portion (C-2) of the catalyst (C), wherein the second portion (C-2) of the catalyst (C) leads to an improved reactivity of the reaction of the diisocyanate compound (A) with the bisepoxide compound (B) and preferably the compound (D) within the copolymerization process, preferably the continuous copolymerization process, for the preparation of the thermoplastic polyoxazolidinone (1).

In an preferred embodiment of the invention the bisepoxide compound (B) comprises the epoxy-terminated oxazolidinone-based prepolymer, wherein this epoxy-terminated oxazolidinone-based prepolymer leads to a higher space time yield in the copolymerization process, preferably the continuous copolymerization process, for producing the thermoplastic polyoxazolidinone (1).

In an embodiment of the method according to the invention the copolymerization is performed at reaction temperatures of $\geq 130\,°C$ to $\leq 320\,°C$, preferably at a temperature of $\geq 140\,°C$ to $\leq 310\,°C$, more preferred at a temperature of $\geq 155\,°C$ to $\leq 300\,°C$. If temperatures below 130 °C are set, the reaction is generally very slow and also side products like isocyanurates are formed. At temperatures above 320 °C, the amount of undesirable secondary products can increase considerably.

In an embodiment of the method according to the invention the copolymerization is performed at an average residence time in the reactor of 5 seconds to 20 minutes, preferably from 10 seconds to 10 minutes, more preferably from 20 seconds to 5 minutes and most preferably from 30 seconds to 5 minutes

In an preferred embodiment of the method according to the invention the copolymerization is performed at reaction temperatures and average residence time in the reactor of $\geq 130\,°C$ to $\leq 320\,°C$, for 5 seconds to 20 minutes preferably at a temperature of $\geq 140\,°C$ to $\leq 310\,°C$ for 10 seconds to 210 minutes, more preferred at a temperature of $\geq 155\,°C$ to $\leq 300\,°C$ for 20 seconds to 5 minutes and most preferred at a temperature of $\geq 155\,°C$ to $\leq 300\,°C$ for 30 seconds to 5 minutes.

In an further, less-preferred embodiment of the invention a compound (F) is timely added after the copolymerization process.

According to the invention compound (F) is one or more compounds selected from the group consisting of a monofunctional isocyanate, a monofunctional epoxide, a cyclic carbonate, a monofunctional alcohol, a monofunctional amine preferred a monofunctional epoxide, wherein the compound (F) acts as a chain regulator for the thermoplastic polyoxazolidinone and further increases the thermal stability of the thermoplastic polyoxazolidinone.

In an embodiment of the invention the compound (F) is a branched, an unbranched aliphatic, an alicyclic and/or an aromatic monofunctional alcohol.

Suitable monofunctional alcohols are for example linear primary alcohols such as methanol, ethanol, propanol, n-butanol, n-pentanol, n-hexanol, n-heptanol, n-octanol, n-nonanol, n-decanol, n-dodecanol, n- tetradecanol, n-hexadecanol, n-octadecanol and n-eicosanol. Suitable branched primary monofunctional alcohols are for example isobutanol, isopentanol, isohexanol, isooctanol, isostearyl alcohol and iso-palmityl alcohol, 2-ethylhexyl alcohol, 3-n-propyl heptyl alcohol, 2-n-propyl heptyl alcohol, and 3- isopropyl heptyl alcohol. Suitable secondary monofunctional alcohols are for example isopropanol, sec-butanol, sec-pentanol (pentane- 2-ol), pentane-3-ol, cyclopentanol, cyclohexanol, sec-hexanol (hexane- 2-ol), hexane-3-ol, sec- heptanol (heptane-2-ol), heptane-3-ol, sec-decanol and decan-3-ol.Examples of suitable tertiary monofunctional alcohols are tert-butanol and tert-amyl alcohol.

Aromatic monofunctional alcohols such as phenol, cresol, thymol, benzyl alcohol and 2-phenylethanol can also be used.

In a further embodiment of the invention the compound (F) is a branched, an unbranched aliphatic, a alicyclic and/or an aromatic monofunctional isocyanate.

Suitable monofunctional isocyanates are for example n-hexylisocyanate, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3 - (2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentyl-phenyl isocyanate, 4-t-butyl phenyl isocyanate, 1-naphthyl isocyanat

In an embodiment of the invention the compound (F) is a branched, anunbranched aliphatic, an alicyclic and/or an aromatic monofunctional amine. Specific examples of the aliphatic monofunctional amine include hexylamine, heptylamine, octylamine, nonylamine, decylamine, undecylamine, dodecylamine, tridecylamine, tetradecylamine, pentadecylamine, hexadecylamine, heptadecyl. Examples include amine, octadecylamine, nonadecylamine, icosylamine, henecosylamine, docosylamin. Specific examples of the alicyclic monofunctional amine include cyclohexylamine, 2-methylcyclohexylamine, 3-methylcyclohexylamine, 4-methylcyclohexylamine, 2,3-dimethylcyclohexylamine, 2,4-dimethylcyclohexylamine, 2-ethylcyclohexylamine, 3-ethylcyclohexylamine, 4-ethylcyclohexylamine, 2-n-propylcyclohexylamine, 3-n-propylcyclohexylamine, 4-n-propylcyclohexylamine, 2-iso-propylcyclohexylamine, 3-iso-propylcyclohexylamine, 4-iso-propylcyclohexylamine, 2-n-butylcyclohexylamine, 3-n-butylcyclohexylamine, 4-n-butylcyclohexyl Silamine, 2-iso-butylcyclohexylamine, 3-iso-butylcyclohexylamine, 4-iso-butylcyclohexylamine, 2-tert-butylcyclohexylamine, 3-tert-butylcyclohexylamine, 4-tert-butylcyclohexylamine, 2-n-octylcyclohexylamine, 3-n-octylcyclohexylamine, 4-n-octylcyclohexylamine, cyclohexylmethylamine, 2-methylcyclohexylmethylamine, 3-methylcyclohexylmethylamine, 4-methylcyclo-hexylmethylamine, dimethyl Cyclohexylmethylamine, trimethylcyclohexylmethylamine, methoxycyclohexylmethyla-mine, ethoxycyclohexylmethylamine, dimethyl Carboxymethyl cyclohexylmethyl amine, methoxy cyclohexylethylamine, dimethoxy cyclohexylethylamine, methylcyclohexylamine propylamine, dodecylamine cyclohexylamine.

Specific examples of the aromatic monofunctional amine include aniline, 1-naphthylamine, 2-naphthylamine, 1-aminoanthracene, o-toluidine, p-toluidine, m-toluidine, 2-ethylaniline, 3-ethylaniline, 4 -Ethylaniline, 2-propylaniline, 3-propylaniline, 4-propylaniline, cumidine, 2-n-butylaniline, 3-n-butylaniline, 4-n-butylaniline, 2-isobutylaniline, 3-isobutyl Aniline, 4-isobutylaniline, 2-sec-butylaniline, 3-sec-butylaniline, 4-sec-butylaniline, 2-tert-butylaniline, 3-tert-butylaniline, 4-tert-butylaniline, 2 -N-pentylaniline, 3-n-pentylaniline 4-n-pentylaniline, 2-isopentylaniline, 3-isopentylaniline, 4-isopentylaniline, 2-sec-pentylaniline, 3-sec-pentylaniline, 4-sec-pentylaniline, 2-tert -Pentylaniline, 3-tert-pentylaniline, 4-tert-pentylaniline, 2-hexylaniline, 3-hexylaniline, 4-hexylaniline, 2-heptylaniline, 3-heptylaniline, 4-heptylaniline, 2- Octylaniline, 3-octylaniline, 4-octylaniline, 2-nonylaniline, 3-nonylaniline, 4-nonylaniline, 2-decylaniline, 3-decylaniline, 4-decylaniline, cyclohexylaniline, diphenylamine, dimethylaniline , Diethylaniline, dipropylaniline, diisopropylaniline, di-n-butylaniline, di-sec-butylaniline, di-tert-butylaniline, trimethylaniline, triethylaniline, tripropylaniline, tri-tert-butylaniline, Anisidine, ethoxyaniline, dimethoxyaniline, diethoxyaniline, trimethoxyaniline, tri-n-butoxyaniline, benzylamine, methylbenzylamine, dimethylbenzylamine, trimethylbenzylamine, methoxybenzylamine, ethoxybenzylamine, dimethoxyben-zylamine, $\alpha$-phenylethylamine, $\beta$-phenylethylamine, methoxyphenylethylamine, dimethoxyphenylethylamine, $\alpha$-phenyl-propylamine, $\beta$ Phenylpropylamine, .gamma. phenylpropylamine, methyl phenylpropylamine.

**In** an embodiment of the invention the compound (F) is at least one compound selected from the group consisting of 4-phenyl-1,3-dioxolan-2-one (styrene carbonate), 1,3-dioxolan-2-one (ethylene carbonate), 4-Methyl-1,3-dioxolan-2-one (propylene carbonate).

**In** a preferred embodiment of the invention the compound (F) is at least one compound selected from the group consisting of phenyl glycidyl ether, o-cresyl glycidyl ether, m-cresyl glycidyl ether, p-cresyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide, butadiene monoepoxide, N-glycidyl phthalimide, and 4-tert-butylphenyl glycidyl ether.

In a preferred embodiment of the invention the compound (F) is 4-tert-butylphenyl glycidyl ether and/or phenyl glycidyl ether and/or o-cresyl glycidyl ether and/or styrene oxide.

In a preferred embodiment of the invention compound (D) and compound (F) are monofunctional epoxides.

In a more preferred embodiment of the invention compound (D) and compound (F) are 4-tert-butylphenyl glycidyl ether and/or phenyl glycidyl ether and/or o-cresyl glycidyl ether and/or styrene oxide.

In an embodiment of the method according to the invention, the compound (F) is present in an amount of $\geq 0.1$ to $\leq 10.0$ weight-%, preferably in an amount of $\geq 0.2$ to $\leq 8.0$ weight-%, more preferred $\geq 0.5$ to $\leq 7.0$ weight-%, based on the theoretical yield of thermoplastic polyoxazolidinone.

In an embodiment of the invention the reactor is the reactor is a co-rotating multi-screw extruder such as a twin-screw or a four-screw extruder or a ring extruder, a co-kneader, a planetary roll extruder, a rotor-stator system, a single-shaft large-volume kneader or a twin-shaft large-volume kneader preferably a co-rotating multi-screw extruder.

The average residence time in the process stage suitable for formation of the thermoplastic polyoxazolidinone (1) as the copolymerization product of the diisocyanate compound (A) and the bisepoxide compound (B) is from 5 seconds to 20 minutes, preferably from 10 seconds to 10 minutes, more preferably from 20 seconds to 5 minutes and most preferably from 30 seconds to 5 minutes.

For reaction of the diisocyanate compound (A) and the bisepoxide compound (B), wherein the bisepoxide compound preferably comprise the epoxy-terminated oxazolidinone-based prepolymer to give the thermoplastic polyoxazolidinone (1), it is necessary to match the process to the exponential rise in viscosity in this phase. For this purpose, preference is given to using rectors as apparatuses in which the thermoplastic polyoxazolidinone (1) product is actively moved by mechanical energy. Particular preference is given to using apparatuses in which the material surfaces clean one another - with allowance for clearance. Such apparatuses are, for example, co-rotating multi-screw extruders such as twin-screw or four-screw extruders or ring extruders, co-kneaders or planetary roll extruders and rotor-stator systems. Further suitable apparatuses are single- or twin-shaft large-volume kneaders. The twin-shaft large-volume kneaders may be co- or counter-rotating. Examples of large-volume kneaders are, for example, CRP (from List Technology AG), Reacom (Buss-SMS-Canzler GmbH), Reasil (Buss-SMS-Canzler GmbH), KRC kneader (Kurimoto, Ltd).

In an embodiment, at least one apparatus of this kind is combined with at least one static mixer, dynamic mixer or mixer-heat exchanger, where the static mixer, dynamic mixer or mixer-heat exchanger produces a mixture of the diisocyanate compound (A), the bisepoxide compound (B), wherein the bisepoxide compound (B) preferably comprises the epoxy-terminated oxazolidinone-based prepolymer, the catalyst (C) and preferably the compound (D). According to an embodiment of the invention, the residence time in the static mixer, dynamic mixer or mixer-heat exchanger is sufficiently short that the rise in viscosity (caused by the polyaddition reaction of the reactive components with one another) does not lead to blockage of the static mixer, dynamic mixer or mixer-heat exchanger and/or an increase in pressure is limited to < 50 bar, preferably < 30 bar, more preferably < 20 bar and most preferably < 10 bar, and the mixture formed is fed to an apparatus that corresponds to the list above. The ratio of the residence times in the static mixer, dynamic mixer or mixer-heat exchanger to the residence times in the downstream apparatus is preferably from 1: 100 to 1: 2, more preferably from 1: 50 to 1: 5, and most preferably from 1: 30 to 1: 10.

In an further embodiment of the invention, in the final process stage, at least two of the abovementioned apparatuses are combined, for example an extruder with a further extruder or an extruder with a large-volume kneader. In this embodiment, the ratio of the residence time in the first apparatus to the residence time in the second apparatus is preferably from 1: 100 to 1: 2, more preferably from 1: 50 to 1: 3, and most preferably from 1: 30 to 1: 5.

Preferably, the molar amount of mono-epoxide and/or mono-isocyanate compound added as compound (D) fulfils certain criteria with respect to the molar amount of bisepoxide compound (B) and diisocyanate compound (A). The ratio r is defined as the absolute value of the molar amount of compound (D) ($n_D$) to the difference between the molar amount of bisepoxide compound (B) ($n_{bisepoxide}$) and the molar amount of diisocyanate compound (A) ($n_{diisocyanate}$) according to the following formula (II)

$$r = \left| n_D / (n_{bisepoxide} - n_{diisocyanate}) \right| \qquad \text{(II)}$$

is preferably in the range of $\geq 1.5$ to $\leq 2.5$, more preferably in the range of $\geq 1.9$ to $\leq 2.1$, and particularly preferred in the range of $\geq 1.95$ to $\leq 2.05$. Without being bound to a theory, all epoxide groups and all isocyanate groups will have reacted at the end of the reaction, when such an amount of chain regulator is being used.

As an alternative, an excess of the monofunctional isocyanate, the monofunctional epoxide, the cyclic carbonate, the monofunctional alcohol, the monofunctional amine preferred the monofunctional epoxide as compound (F) is added as chain regulator to the reaction mixture after the reaction between bisepoxide and diisocyanate has been completed. Without being bound to a theory, the terminal epoxide groups or the terminal isocyanate groups resulting from the reaction of the bisepoxide and the diisocyanate will be converted to inert end groups by reaction with the regulator. The excess amount of regulator is subsequently removed from the product, e.g., by extraction, precipitation, distillation, stripping or thin film evaporation.

The present invention further relates to a spun fibre, comprising a thermoplastic polyoxazolidinone according to the invention and a textile, comprising such a spun fiber.

The method according to the invention is suited for the synthesis of oxazolidinones with interesting properties for use, for example, as pharmaceutics or antimicrobiotics.

Thermoplastic polyoxazolidinones obtained by the method according to the invention are particularly suited as polymer building blocks in polyurethane chemistry. For example, epoxy-terminated oxazolidinones may be reacted with polyols or polyamines to form foams or thermosets. Such epoxy-terminated oxazolidinones are also suited for the preparation of composite materials. Epoxy-terminated oxazolidinones may also be reacted with their NCO-terminated counterparts to form high molecular weight thermoplastic polyoxazolidinones, which are useful as transparent, high temperature-stable materials. Thermoplastic polyoxazolidinones with high molecular weight obtained by the method according to the invention are particularly suited as transparent, high temperature-stable thermoplastic materials.

The conventional additives for these thermoplastics, such as fillers, UV stabilizers, heat stabilizers, antistatics and pigments, can also be added in the conventional amounts to the thermoplastic polyoxazolidinones according to the invention; the mould release properties, the flow properties and/or the flame resistance can optionally also be improved by addition of external mould release agents, flow agents and/or flameproofing agents (e.g. alkyl and aryl phosphites and phosphates, alkyl- and arylphosphanes and low molecular weight carboxylic acid alkyl and aryl esters, halogen compounds, salts, chalk, quartz flour, glass fibres and carbon fibres, pigments and a combination thereof. Such compounds are described e.g. in WO 99/55772, p. 15 - 25, and in the corresponding chapters of the "Plastics Additives Handbook", ed. Hans Zweifel, 5th edition 2000, Hanser Publishers, Munich).

The thermoplastic polyoxazolidinones obtained according to the current invention have excellent properties regarding stiffness, hardness and chemical resistance.

They are also useful in polymer blends with other polymers such as polystyrene, high-impact polystyrene (polystyrene modified by rubber for toughening, usually polybutadiene), copolymers of styrene such as styrene-acrylonitrile copolymer (SAN), copolymers of styrene, alpha-methylstyrene and acrylonitrile, styrene - methyl methacrylate copolymers, styrene - maleic anhydride copolymers, styrene - maleimide copolymers, styrene - acrylic acid copolymers, SAN modified by grafting rubbers for toughening such as ABS (acrylonitrile-butadiene-styrene polymer), ASA (acrylonitrile-styrene-acrylate), AES (acrylonirile-EPDM-styrene), ACS (acrylonitrile-chlorinated polyethylene-stryrene) polymers, copolymers of styrene, alpha-methylstyrene and acrylonitrile modified with rubbers such as polybutadiene or EPDM, MBS/MABS (methyl methacrylate - styrene modified with rubber such as polybutadiene or EPDM), aromatic polyesters such as polyethylene terephthalate (PET), polybutylene terephthalate (PBT), polytrimethylene terephthalate (PTT), aliphatic polyamides such as PA6, PA6,6, PA4,6, PA 11 or PA 12, polylactic acid, aromatic polycarbonates such as the polycarbonate of bisphenol A, co-polycarbonates such as co-polycarbonates of bisphenol A and bisphenol TMC, polymethylmethacrylate (PMMA), polyvinylchloride, polymethyleneoxide (POM), polyphenylene ether, polyphenylene sulphide (PPS, polysulfones, polyetherimide (PEI), polyethylene, polypropylene.

They are also useful for blends in combination with the above polymers or others, for example blends of polycarbonate and ABS, polycarbonate and PET, polycarbonate and PBT, polycarbonate and ABS and PBT or polycarbonate and ABS and PBT.

The properties of the thermoplastic polyoxazolidinones according to this invention or blends with the above-mentioned polymers or others can also be modified by fillers such as glass fibers, hollow or solid glass spheres, silica (for example fumed or precipitated silica), talcum, calcium carbonate, titanium dioxide, carbon fibers, carbon black, natural fibers such as straw, flax, cotton or wood fibers.

Thermoplastic polyoxazolidinones can be mixed with any usual plastics additive such as antioxidants, light stabilizers, impact modifiers, acid scavengers, lubricants, processing aids, antiblocking additives, slip additives, antifogging additives, antistatic additives, antimicrobials, chemical blowing agents, colorants, optical brighteners, fillers and reinforcements as well as flame retardant additives.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to -80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylenevinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers. materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant composition. An exemplary impact modifier comprises an acrylic polymer in an amount of 2 to 15 wt%, specifically 3 to 12 wt%, based on the total weight of the flame retardant composition.

The composition may also comprise mineral fillers. In an embodiment, the mineral fillers serve as synergists. The synergist facilitates an improvement in the flame retardant properties when added to the flame retardant composition over a comparative thermoplastic polyoxazolidinone composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler it talc having an average particle size of 1 to 3 micrometers..

The mineral filler is present in amounts of 0.1 to 20 wt%, specifically 0.5 to 15 wt%, and more specifically 1 to 5 wt%, based on the total weight of the flame retardant composition.

The thermoplastic polyoxazolidinones can also be colored with a whole range of soluble organic dyes and with pigment dyes, which can be either organic or inorganic.

Further possible uses of the thermoplastic polyoxazolidinones according to the invention are:

01. Housing for electrical appliances (e.g. household appliances, computers, mobile phones, display screens, television,...), including transparent or translucent housing parts like lamp covers.
02. Light guide panels and BLUs
03. Optical Data Storage (CD, DVD, Blu-ray Discs)
04. electrically insulating materials for electrical conductors, for plug housings and plug connectors, carrier material for organic photoconductors, Chip boxes and chip supports, fuse encapsulation
05. Static dissipative / electrically conductive formulations for use in explosion protection applications and others with respective requirements
06. Optics, diffusers, reflectors, light guides as well as housings for LED and conventional Lighting, e.g. streetlights, industrial lamps, searchlights, traffic lights,...
07. Thermally conductive formulations for thermal management applications like heatsinks.
08. Applications for Automotive and other Transportation vehicles (cars, buses, trucks, railway, aircrafts, ships) as Glazing, also safety glazing, lighting (e.g. headlamp lenses, tail lights, turn signals, back-up lights, fog lights; bezels and reflectors), sun and panoramic roofs, cockpit canopies, cladding of railway or other cabins, Windscreens, interiors and exteriors parts (e.g. instrument covers, consoles, dashboards, mirror housings, radiator grilles, bumpers, spoilers),
09. EVSE and batteries
10. Metal substitution in gears, seals, supporting rings
11. Roof structures (e.g. for sports arenas, stations, conservatories, greenhouses)
12. windows (including theft-proof windows and projectile-resistant windows, teller's windows, barriers in banks),
13. partition walls
14. solar panels
15. Medical devices (components of blood pumps, auto-injectors and mobile medical-injection pumps, IV access devices, renal therapy and inhalation devices (such as nebulizers, inhalers) sterilisable surgical instruments, medical implants, oxygenators, dialyzers, ...)
16. Foodcontact applications (tableware, dinnerware, glasses, tumblers, food containers, institutional food trays, water bottles, water filter systems)
17. sports articles, such as e.g. slalom poles or ski boot buckles.
18. household articles, such as e.g. kitchen sinks and letterbox housings.
19. safety applications (glasses, visors or optical corrective glasses, helmets, visors, riot gear (helmets and shields), safety panes)
20. Sunglasses, swimming goggles, SCUBA masks
21. Signs, displays, poster protection
22. Lightweight luggage
23. water fitting, pump impellors, thin hollow fibres for water treatment
24. Industrial pumps, valves and seals, connectors
25. Membranes
26. Gas separation
27. Coating applications (e.g. Anticorrosion paint, powder coating)

This application likewise provides the shaped articles and moldings and extrudates from the polymers according to the invention.

## Examples

The present invention will be further described with reference to the following examples.

*Diisocyanate compound (A)*

MDI-1    MDI 1806: Mixture of 4,4'-Methylene diphenyl diisocyanate, and 4,2'-Methylene diphenyl diisocyanate 98 %, Covestro AG, Germany was used without further purification

*Epoxide compound (B)*

BADGE   2-[[4-[2-[4-(Oxiran-2-ylmethoxy)phenyl]propan-2-yl]phenoxy]methyl]oxirane   (Bisphenol-A-diglycidylether), difunctional epoxide, D.E.R. 332 (Dow) was used without any further purification. (EEW: 171-175 g/eq.)

EPO-PRP   epoxy-terminated prepolymer based on MDI-1 and BADGE with a target molecular weight of 1250 g·mol$^{-1}$ (see example 1)

*Catalyst (C)*

TPPCl   Tetraphenylphosphoniumchlorid (Sigma-Aldrich, 98 %)
TPPBr   Tetraphenylphosphoniumbromid (Sigma-Aldrich, 97 %)

*Compound (D)*

BPGE   para-tert. -butylphenyl glycidyl ether (ABCR Dr. Braunagel GmbH + Co.KG, > 95 %)
pTI   *para*-tolyl isocyanate (Acros Organics, 99 %)

MDI-1, TPPCl, TPPBr, BADGE, and BPGE were used as received without further purification. BADGE was used after melting at 50°C, while BPGE and pTI was stored at 7 °C.

*Reactor 1 - Synthesis epoxy-terminated oxazolidinone-based prepolymer (PRP)*

The reaction was performed in a 1000 mL 4 neck round bottom flask equipped with a glass reflux condenser, a gas inlet (N$_2$), a syringe pump (IP-SYRDOS2-HP-XLP from HiTec-Zang), a glass inlet tube equipped with a temperature probe (GFX 460 from Ebro) and an overhead KPG agitator (RW20 from IKA). The round bottom flask was heated with a heating mantle from Winkler (WM/BRI/250 with a maximum heating capacity of 120 W) which was connected to the temperature probe with an RB 1691 B-S from Ebro.

*Reactor 2 - Copolymerization for the formation of the thermoplastic polyoxazolidinone (chain prolongation)*

The copolymerization reaction was carried out in a process 11 twin-screw-extruder (co-rotating) from Thermo Scientific. Thereby, the solid prepolymer powder was dosed with a process 11 gravimetric MiniTwin Feeder, while the liquid monomer/chain regulator mixture (e.g. MDI-1 and BPGE or pTI) were dosed with a syringe pump (IP-SYRDOS2-HP-XLP from HiTec-Zang).

*Characterisation of thermoplastic polyoxazolidinone*

The average chain length of the thermoplastic polyoxazolidinones was controlled by the molar ratio of bisepoxide, diisocyanate and/or compound (D).

The formula below gives a general mathematical formula to calculate the average chain length n in the polymeric product obtained with a diisocyanate (A) and a bisepoxide (B):

$$n = (1 + q) / (1 + q - 2pq) \qquad \text{(III)}$$

with $q = n_x / n_y \leq 1$ and x,y = bisepoxide (B) or diisocyanate (A) and with the conversion p
whereby $n_x$ and $n_y$ are the molar amounts of bisepoxide or diisocyanate, respectively.

The average molecular weight M of the thermoplastic polyoxazolidinones can be calculated by the formula given below

$$M = n*((M_A + M_B)/2) + (2*M_D) \qquad \text{(IV)}$$

With $M_A$, $M_B$, and $M_D$ being the molar masses of the compounds (A), (B), and (D).

*IR-spectroscopy*

Solid state IR analyses were performed on a Bruker ALPHA IR spectrometer equipped with a diamond probe head. The software OPUS 7.5 was used for data treatment. A background spectrum was recorded against ambient air. Thereafter, a small sample of the thermoplastic polyoxazolidinone (2 mg) was applied to the diamond probe and the IR spectrum recorded averaging over 24 spectra obtained in the range of 4000 to 400 cm$^{-1}$ with a resolution of 4 cm$^{-1}$.

The OXA:PIR ratio was calculated by means of the signal height within the IR-spectroscopy. Therefore the characteristic carbonyl band at 1750 cm$^{-1}$ was used for the oxazolidinone group, while the signal at 1710 cm$^{-1}$ was used for the determination of the isocyanurate amount. The OXA:PIR ratio was calculated based on following formular:

$$\text{OXA:PIR} = OXA:PIR = \frac{\text{hight of signal at } 1750\ cm^{-1}}{\text{hight of signal at } 1710\ cm^{-1}} \qquad \text{(V)}$$

*GPC analysis*

The determination of the number average molecular weights, weight average molecular weights and the polydispersity index were carried out by gel permeation chromatography (GPC). GPC was performed on an Agilent 1100 Series instrument with N,N-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector. The column flow rate in all measurements was set to 1 mL·min$^{-1}$. For determining molecular weights, the calibration was performed with poly(styrene) standards (ReadyCal-Kit PS - Mp 370-2520000Da from PSS). The samples were analysed using PSS WinGPC UniChrom V 8.2 Software. For the evaluation of the resulting GPC curves the molecular mass regions from >500 g·mol$^{-1}$ were taken.

*Color number*

The Gardner color index was determined by using a Lico 620 from Hach. Therefore, 500 mg of the polymer sample was dissolved in 7 mL benzonitrile. The polymer solution was filled into a cuvette which was subsequently analyzed following the DIN EN ISO 1557.

Synthesis epoxy-terminated oxazolidinone-based prepolymer (PRP)

PRP-Example *1: Prepolymer synthesis with methylene diphenyl diisocyanate (MDI-1) as diisocyanate (A) with Bisphenol A diglycidyl ether (BADGE) as diepoxide (B), using tetraphenylphosphonium bromide (TPPBr) as catalyst (C-1) and no compound (D).*

Under a continuous flow of nitrogen, a glass flask (1000 mL) was charged with Bisphenol A diglycidylether (320.94 g). Subsequently, the mixture was stirred and heated to 175°C and TPPBr (3.95 g) was added. A glass bottle (250 mL) was charged with methylene diphenyl diisocyanate (MDI-1) (145.77 g). The methylene diphenyl diisocyanate was added slowly to the catalyst solution within 120 min. The reaction was stirred for another 30 min at 175 °C, transferred to a alumina tray and allowed to cool down to ambient temperature.

GPC analysis shows an Mp of 1779 g·mol$^{-1}$ for the PRP product.

PRP-Example 2: *Prepolymer synthesis with methylene diphenyl diisocyanate (MDI-1) as diisocyanate (A) with Bisphenol A diglycidyl ether (BADGE) as diepoxide (B), using tetraphenylphosphonium bromide (TPPBr) as catalyst (C-1). Para-tert-butylphenyl glycidylether as monoepoxide compound (D) and TPPBr as catalyst (C-2) were added to the polymer mixture after the reaction.*

Under a continuous flow of nitrogen, a glass flask (1000 mL) was charged with Bisphenol A diglycidylether (320.94 g). Subsequently, the mixture was stirred and heated to 175°C and TPPBr (3.95 g) was added. A glass bottle (250 mL) was charged with methylene diphenyl diisocyanate (MDI-1) (145.77 g). The methylene diphenyl diisocyanate was added slowly to the catalyst solution within 120 min. The reaction was stirred for another 30 min at 175 °C before para-tert-butylphenyl glycidylether (12.03 g) and another portion of TPPBr (3.95 g) were added to the prepolymer melt. Once the reaction mixture was homogeneous, the prepolymer melt was transferred to a alumina tray and allowed to cool down to ambient temperature.

GPC analysis shows an Mp of 1596 g·mol$^{-1}$ for the PRP product.

PRP-Example 3: *Prepolymer synthesis with methylene diphenyl diisocyanate (MDI-1) as diisocyanate (A) with Bisphenol A diglycidyl ether (BADGE) as diepoxide (B), using tetraphenylphosphonium bromide (TPPBr) as catalyst (C-1) and para-tert-butylphenyl glycidylether as monoepoxide compound (D). TPPBr as catalyst (C-2) was added to the polymer mixture after the reaction.*

Under a continuous flow of nitrogen, a glass flask (1000 mL) was charged with Bisphenol A diglycidylether (320.94 g) and para-tert-butylphenyl glycidylether (11.67 g). Subsequently, the mixture was stirred and heated to 175°C and TPPBr (3.95 g) was added. A glass bottle (250 mL) was charged with methylene diphenyl diisocyanate (MDI-1) (145.77 g). The methylene diphenyl diisocyanate was added slowly to the catalyst solution within 120 min. The reaction was stirred for another 30 min at 175 °C before and another portion of TPPBr (3.95 g) was added to the prepolymer melt. Once the reaction mixture was homogeneous, the prepolymer melt was transferred to a alumina tray and allowed to cool down to ambient temperature.

GPC analysis shows an $M_p$ of 1714 g·mol$^{-1}$ for the PRP product.

Synthesis thermoplastic polyoxazolidinone

Example 1: *Reaction of methylene diphenyl diisocyanate (MDI-1) as diisocyanate (A) with the PRP synthesized in example 1 as diepoxide (B), using tetraphenylphosphonium chloride (TPPCl) as catalyst (C-2) and para-tert-butylphenyl glycidyl ether (BPGE) as compound (D).*

The temperature zones of the mini-extruder were heated as followed: zone 1: 100 °C, zone 2: 200 °C, zone 3: 240, and zone: 4 - 7 + nozzle 275 °C and the rotation speed of the extruder screws was set to 200 min$^{-1}$. The solid PRP (470.77 g) synthesized in PRP-example 1 was grinded to a fine powder and mixed with TPPCl (3.64 g). The homogeneous mixture was filled into to the gravimetric feeder and subsequently dosed into the first zone with a constant dosing speed of 200 g/h. A mixture of MDI-1 (97.47 g) and BPGE (12.03 g) was weight into a 250 mL glass bottle which was attached to a syringe pump. Once the mini-extruder was filled with the PRP/TPPCl mixture, the MDI-1/BPGE mixture was dosed (0.77 g/min) with the syringe pump into the zone 3 of the mini-extruder. After 10 retention times ($\tau$ = app. 60 sec.), the reaction yielded a constant product strand and a sample was taken for analytical purposes.

Example 2: *Reaction of methylene diphenyl diisocyanate (MDI-1) as diisocyanate (A) with the PRP synthesized in example 1 as diepoxide (B), using tetraphenylphosphonium bromide (TPPBr) as catalyst (C-2) and para-tert-butylphenyl glycidyl ether (BPGE) as compound (D).*

The temperature zones of the mini-extruder were heated as followed: zone 1: 100 °C, zone 2: 200 °C, zone 3: 240, and zone: 4 - 7 + nozzle 275 °C and the rotation speed of the extruder screws was set to 200 min$^{-1}$. The solid PRP (470.77 g) synthesized in PRP-example 1 was grinded to a fine powder and mixed with TPPBr (3.95 g). The homogeneous mixture was filled into to the gravimetric feeder and subsequently dosed into the first zone with a constant dosing speed of 200 g/h. A mixture of MDI-1 (97.47 g) and BPGE (12.03 g) was weight into a 250 mL glass bottle which was attached to a syringe pump. Once the mini-extruder was filled with the PRP/TPPBr mixture, the MDI-1/BPGE mixture was dosed (0.77 g/min) with the syringe pump into the zone 3 of the mini-extruder. After 10 retention times ($\tau$ = app. 60 sec.), the reaction yielded a constant product strand and a sample was taken for analytical purposes.

Example 3: *Reaction of methylene diphenyl diisocyanate (MDI-1) as diisocyanate (A) with the PRP synthesized in example 1 as diepoxide (B), using tetraphenylphosphonium bromide (TPPBr) as catalyst (C-2) and para-tolyisocyanate (pTI) as compound (D).*

The temperature zones of the mini-extruder were heated as followed: zone 1: 100 °C, zone 2: 200 °C, zone 3: 240, and zone: 4 - 7 + nozzle 275 °C and the rotation speed of the extruder screws was set to 200 min$^{-1}$. The solid PRP (470.77 g) synthesized in PRP-example 1 was grinded to a fine powder and mixed with TPPCl (3.64 g). The homogeneous mixture was filled into to the gravimetric feeder and subsequently dosed into the first zone with a constant dosing speed of 200 g/h. A mixture of MDI-1 (83.12 g) and pTI (8.44 g) was weight into a 250 mL glass bottle which was attached to a syringe pump. Once the mini-extruder was filled with the PRP/TPPCl mixture, the MDI-1/pTI mixture was dosed (0.67 g/min) with the syringe pump into the zone 3 of the mini-extruder. After 10 retention times ($\tau$ = app. 60 sec.), the reaction yielded a constant product strand and a sample was taken for analytical purposes.

Example 4: *Reaction of methylene diphenyl diisocyanate (MDI-1) as diisocyanate (A) with the PRP synthesized in example 2 as diepoxide (B).*

The temperature zones of the mini-extruder were heated as followed: zone 1: 100 °C, zone 2: 200 °C, zone 3: 240, and zone: 4 - 7 + nozzle 275 °C and the rotation speed of the extruder screws was set to 200 min$^{-1}$. The solid PRP (486.64 g) synthesized in PRP-example 2 was grinded to a fine powder. The powder was filled into to the gravimetric feeder and subsequently dosed into the first zone with a constant dosing speed of 200 g/h. MDI-1 (97.47 g) was weight into a 250 mL glass bottle which was attached to a syringe pump. Once the mini-extruder was filled with the PRP mixture, the MDI-1 was dosed (0.68 g/min) with the syringe pump into the zone 3 of the mini-extruder. After 10 retention times ($\tau$ = app. 60 sec.), the reaction yielded a constant product strand and a sample was taken for analytical purposes.

Example 5: *Reaction of methylene diphenyl diisocyanate (MDI-1) as diisocyanate (A) with the PRP synthesized in example 2 as diepoxide (B).*

The temperature zones of the mini-extruder were heated as followed: zone 1: 100 °C, zone 2: 200 °C, zone 3: 240, and zone: 4 - 7 + nozzle 275 °C and the rotation speed of the extruder screws was set to 200 min$^{-1}$. The solid PRP (486.64 g) synthesized in RPR-example 3 was grinded to a fine powder. The powder was filled into to the gravimetric feeder and subsequently dosed into the first zone with a constant dosing speed of 200 g/h. MDI-1 (97.47 g) was weight into a 250 mL glass bottle which was attached to a syringe pump. Once the mini-extruder was filled with the PRP mixture, the MDI-1 was dosed (0.68 g/min) with the syringe pump into the zone 3 of the mini-extruder. After 10 retention times ($\tau$ = app. 60 sec.), the reaction yielded a constant product strand and a sample was taken for analytical purposes.

Example 6 (comparative): *Reaction of methylene diphenyl diisocyanate (MDI-1) as diisocyanate (A) with the PRP synthesized in example 1 as diepoxide (B), using tetraphenylphosphonium bromide (TPPBr) as catalyst (C-2) and para-tert-butylphenyl glycidyl ether (BPGE) as compound (D). Reaction performed in a glass apparatus.*

A round bottom glass flask was charged with the PRP-example 1 (50 g) and the solid prepolymer was heated to 220 °C to yield a viscous prepolymer melt. Once the prepolymer was molten, TPPBr (0.49 g) was added. MDI-1 (10.41 g) and BPGE (1.28 g) were filled into a 50 mL glass bottle which was attached to a syringe pump. The MDI-1/BPGE mixture was added within 2 minutes to the vigorously stirred prepolymer melt. Due to the exothermic nature of the reaction, the mixture quickly heats up to a temperature peak of 275 °C. After an additional mixing time of 1 minutes the reaction was stopped and the reaction allowed to cool down. A sample of the solid product was taken for analytical purposes.

**Table:** Comparison of the results of Examples 1 to 6:

| Example | Process | A | B | D | Mp | OXA: PIR | Color number |
|---------|---------|---|---|---|-----|----------|--------------|
| 1 | Continuous | MDI 1 | EPO-PRP-1 | BPGE | 25100 | 3.61 | 3.2 |
| 2 | Continuous | MDI 1 | EPO-PRP-1 | BPGE | 18700 | 3.51 | 3.2 |
| 3 | Continuous | MDI 1 | EPO-PRP-1 | pTI | 27300 | 3.23 | 2.4 |
| 4 | Continuous | MDI 1 | EPO-PRP-2 | BPGE | 21550 | 3.19 | 4.7 |
| 5 | Continuous | MDI 1 | EPO-PRP-3 | BPGE | 24640 | 3.39 | 4.9 |
| 6 (comp.) | Discontinuous | MDI 1 | EPO-PRP-1 | BPGE | 9356 | 2.61 | 7.9 |

OXA:PIR: OXA:PIR ratio was calculated as described in the "characterization of the thermoplastic polyoxazolidinone"

Color number: value refers to the Gardner color scale and was determined as described "characterization of the thermoplastic polyoxazolidinone" section.

**Claims**

**1.** A process, preferably a continuous process, for producing a thermoplastic polyoxazolidinone (1) comprising copolymerizing a diisocyanate compound (A) with a bisepoxide compound (B) in the presence of a catalyst (C) in a reactor;

wherein the diisocyanate compound (A) and the bisepoxide compound (B) are continuously and/or step-wise added, preferably continuously added, to the reactor and the polyoxazolidinone is continuously and/or step-wise, preferably continuously, removed from the reactor.

2. The process according to claim 1, wherein the bisepoxide compound (B) comprises an epoxy-terminated oxazolidinone-based prepolymer.

3. The process according to claim 1 or 2, wherein the epoxy-terminated oxazolidinone-based prepolymer is the copolymerization reaction product of a first portion (A-1) of the diisocyanate compound (A) with the bisepoxide compound (B) in the presence of a first portion (C-1) of the catalyst (C), wherein the molar ratio of the epoxy groups of the polyepoxide compound (B) to the isocyanate groups of the first portion (A-1) of the polyisocyanate compound (A) is from 1.1:1 to less than 25:1 preferably from 1.4:1 and less than 5:1.

4. The process according to any one of claims 1 to 3, wherein the catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, and tetraphenylphosphonium carbonate, preferable tetraphenylphosphonium chloride, tetraphenylphosphonium bromide and tetraphenylphosphonium iodide.

5. The process according to any one of claims 1 to 4, wherein the copolymerization is in the presence of a compound (D), wherein the compound (D) comprises at least one of a monofunctional isocyanate, a monofunctional epoxide, a cyclic carbonate, a monofunctional alcohol, and a monofunctional amine, preferably a monofunctional epoxide and monofunctional isocyanate and most preferred monofunctional isocyanate.

6. The process according to claim 5, wherein the compound (D) is added to the diisocyanate compound (A) and/or to the bisepoxide compound (B) preferably to the diisocyanate compound (A) prior the copolymerization.

7. The process according to claim 5 or 6, wherein the compound (D) comprises the monofunctional epoxide and is added a to the bisepoxide compound (B) prior the copolymerization.

8. The process according to claim 7, wherein the copolymerization comprises

(alpha) Mixing the bisepoxide compound (B) and the monofunctional epoxide to provide a mixture (alpha),
(beta) Adding a second portion (A-2) of the diisocyanate compound (A) to the mixture (alpha) and copolymerizing the mixture in the reactor.

9. The process according to claim 5 or 6, wherein the compound (D) comprises the monofunctional isocyanate and is added a to the diisocyanate compound (A) prior the copolymerization.

10. The process according to claim 9, wherein the copolymerization comprises (gamma) Providing the bisepoxide compound (B),
(delta) Adding a second portion (A-2) of the diisocyanate compound (A) and the monofunctional isocyanate to the bisepoxide compound (B) of step (gamma) and copolymerizing the mixture in the reactor.

11. The process according to any one of claims 8 to 10, wherein the mixture (alpha) or the bisepoxide compound (B) in step (gamma) comprises a second portion (C-2) of the catalyst (C).

12. The process according to any one of claims 8 to 11, wherein the bisepoxide compound (B) comprises the epoxy-terminated oxazolidinone-based prepolymer.

13. The process according to any one of claims 1 to 11, wherein the continuous copolymerization process is in the absence of a solvent (E).

14. The process according to any one of claims 1 to 12, wherein the reactor is a co-rotating multi-screw extruder such as a twin-screw or a four-screw extruder or a ring extruder, a co-kneader, a planetary roll extruder, a rotor-stator system, a single-shaft large-volume kneader or a twin-shaft large-volume kneader.

15. The process according to claim 14, wherein the reactor is a co-rotating twin-screw extruder.

**Patentansprüche**

1. Verfahren, vorzugsweise kontinuierliches Verfahren, zur Herstellung eines thermoplastischen Polyoxazolidinons (1), das die Copolymerisation einer Diisocyanat-Verbindung (A) mit einer Bisepoxid-Verbindung (B) in Gegenwart eines Katalysators (C) in einem Reaktor umfasst; wobei die Diisocyanat-Verbindung (A) und die Bisepoxid-Verbindung (B) kontinuierlich oder portionsweise, vorzugsweise kontinuierlich, zum Reaktor gegeben werden und das Polyoxazolidinon kontinuierlich oder portionsweise, vorzugsweise kontinuierlich, aus dem Reaktor entfernt wird.

2. Verfahren nach Anspruch 1, wobei die Bisepoxid-Verbindung (B) ein Prepolymer auf Oxazolidinon-Basis mit Epoxy am Kettenende umfasst.

3. Verfahren nach Anspruch 1 oder 2, wobei das Prepolymer auf Oxazolidinon-Basis mit Epoxy am Kettenende das Produkt einer Copolymerisationsreaktion eines ersten Teils (A-1) der Diisocyanat-Verbindung (A) mit der Bisepoxid-Verbindung (B) in Gegenwart eines ersten Teils (C-1) des Katalysators (C) ist, wobei das Stoffmengenverhältnis der Epoxygruppen der Polyepoxid-Verbindung (B) zu den Isocyanatgruppen des ersten Teils (A-1) der Polyisocyanat-Verbindung (A) 1,1:1 bis weniger als 25:1, vorzugsweise 1,4:1 bis weniger als 5:1, beträgt.

4. Verfahren nach einem der Ansprüche 1 bis 3, wobei es sich bei dem Katalysator (C) um mindestens eine Verbindung handelt, die ausgewählt ist aus der Gruppe bestehend aus Tetraphenylphosphoniumchlorid, Tetraphenylphosphoniumbromid, Tetraphenylphosphoniumiodid, Bis(triphenylphosphin)iminiumchlorid, Tetraphenylphosphoniumnitrat und Tetraphenylphosphoniumcarbonat, vorzugsweise Tetraphenylphosphoniumchlorid, Tetraphenylphosphoniumbromid und Tetraphenylphosphoniumiodid.

5. Verfahren nach einem der Ansprüche 1 bis 4, wobei die Copolymerisation in Gegenwart einer Verbindung (D) erfolgt, wobei die Verbindung (D) ein monofunktionelles Isocyanat, ein monofunktionelles Epoxid, ein cyclisches Carbonat, einen monofunktionellen Alkohol und/oder ein monofunktionelles Amin, vorzugsweise ein monofunktionelles Epoxid und ein monofunktionelles Isocyanat und am meisten bevorzugt ein monofunktionelles Isocyanat, umfasst.

6. Verfahren nach Anspruch 5, wobei die Verbindung (D) vor der Copolymerisation zu der Diisocyanat-Verbindung (A) und/oder zu der Bisepoxid-Verbindung (B), vorzugsweise zu der Diisocyanat-Verbindung (A), gegeben wird.

7. Verfahren nach Anspruch 5 oder 6, wobei die Verbindung (D) das monofunktionelle Epoxid umfasst und vor der Copolymerisation zu der Bisepoxid-Verbindung (B) gegeben wird.

8. Verfahren nach Anspruch 7, wobei die Copolymerisation Folgendes umfasst:

   (alpha) das Mischen der Bisepoxid-Verbindung (B) und des monofunktionellen Epoxids, wodurch eine Mischung (alpha) erhalten wird,
   (beta) das Zugeben eines zweiten Teils (A-2) der Diisocyanat-Verbindung (A) zu der Mischung (alpha) und das Copolymerisieren der Mischung im Reaktor.

9. Verfahren nach Anspruch 5 oder 6, wobei die Verbindung (D) das monofunktionelle Isocyanat umfasst und vor der Copolymerisation zu der Diisocyanat-Verbindung (A) gegeben wird.

10. Verfahren nach Anspruch 9, wobei die Copolymerisation Folgendes umfasst:

    (gamma) das Bereitstellen der Bisepoxid-Verbindung (B),
    (delta) das Zugeben eines zweiten Teils (A-2) der Diisocyanat-Verbindung (A) und des monofunktionellen Isocyanats zu der Bisepoxid-Verbindung (B) von Schritt (gamma) und das Copolymerisieren der Mischung im Reaktor.

11. Verfahren nach einem der Ansprüche 8 bis 10, wobei die Mischung (alpha) oder die Bisepoxid-Verbindung (B) in Schritt (gamma) einen zweiten Teil (C-2) des Katalysators (C) umfasst.

12. Verfahren nach einem der Ansprüche 8 bis 11, wobei die Bisepoxid-Verbindung (B) das Prepolymer auf Oxazolidinon-Basis mit Epoxy am Kettenende umfasst.

13. Verfahren nach einem der Ansprüche 1 bis 11, wobei das kontinuierliche Copolymerisationsverfahren ohne ein Lösungsmittel (E) erfolgt.

14. Verfahren nach einem der Ansprüche 1 bis 12, wobei der Reaktor ein gleichsinnig drehender Mehrfach-Schneckenextruder, wie ein Doppelschnecken- oder Vierschneckenextruder, oder ein Ringextruder, ein Co-Kneter, ein Planetwalzenextruder, ein Rotor-Stator-System, ein großvolumiger Einwellenkneter oder ein großvolumiger Doppelwellenkneter ist.

15. Verfahren nach Anspruch 14, wobei der Reaktor ein gleichsinnig drehender Mehrfach-Schneckenextruder ist.


**Revendications**

1. Procédé, de préférence procédé continu, de production d'une polyoxazolidinone thermoplastique (1) comprenant la copolymérisation d'un composé diisocyanate (A) avec un composé bisépoxyde (B) en présence d'un catalyseur (C) dans un réacteur ;
dans lequel le composé diisocyanate (A) et le composé bisépoxyde (B) sont ajoutés en continu et/ou par étapes, de préférence en continu, au réacteur et la polyoxazolidinone est éliminée du réacteur en continu et/ou par étapes, de préférence en continu.

2. Procédé selon la revendication 1, dans lequel le composé bisépoxyde (B) comprend un prépolymère à base d'oxazolidinone à terminaison époxy.

3. Procédé selon la revendication 1 ou 2, dans lequel le prépolymère à base d'oxazolidinone à terminaison époxy est le produit de la réaction de copolymérisation d'une première partie (A-1) du composé diisocyanate (A) avec le composé bisépoxyde (B) en présence d'une première partie (C-1) du catalyseur (C), dans lequel le rapport molaire des groupes époxy du composé polyépoxyde (B) sur les groupes isocyanate de la première partie (A-1) du composé polyisocyanate (A) est de 1,1:1 à moins de 25:1 de préférence de 1,4:1 et moins de 5:1.

4. Procédé selon l'une quelconque des revendications 1 à 3, dans lequel le catalyseur (C) est au moins un composé sélectionné dans le groupe constitué d'un chlorure de tétraphénylphosphonium, un bromure de tétraphénylphosphonium, un iodure de tétraphénylphosphonium, un chlorure de bis(triphénylphosphine)iminium, un nitrate de tétraphénylphosphonium et un carbonate de tétraphénylphosphonium, de préférence un chlorure de tétraphénylphosphonium, un bromure de tétraphénylphosphonium et un iodure de tétraphénylphosphonium.

5. Procédé selon l'une quelconque des revendications 1 à 4, dans lequel la copolymérisation est en la présence d'un composé (D), le composé (D) comprenant au moins un parmi un isocyanate monofonctionnel, un époxyde monofonctionnel, un carbonate cyclique, un alcool monofonctionnel et une amine monofonctionnelle, de préférence un époxyde monofonctionnel et un isocyanate monofonctionnel et le plus préférablement un isocyanate monofonctionnel.

6. Procédé selon la revendication 5, dans lequel le composé (D) est ajouté au composé diisocyanate (A) et/ou au composé bisépoxyde (B) de préférence au composé diisocyanate (A) avant la copolymérisation.

7. Procédé selon la revendication 5 ou 6, dans lequel le composé (D) comprend l'époxyde monofonctionnel et est ajouté au composé bisépoxyde (B) avant la copolymérisation.

8. Procédé selon la revendication 7, dans lequel la copolymérisation comprend :

(alpha) mélanger le composé bisépoxyde (B) et l'époxyde monofonctionnel pour fournir un mélange (alpha),
(bêta) ajouter une seconde partie (A-2) du composé diisocyanate (A) au mélange (alpha) et copolymériser le mélange dans le réacteur.

9. Procédé selon la revendication 5 ou 6, dans lequel le composé (D) comprend l'isocyanate monofonctionnel et est ajouté au composé diisocyanate (A) avant la copolymérisation.

10. Procédé selon la revendication 9, dans lequel la copolymérisation comprend :

(gamma) fournir le composé bisépoxyde (B),

(delta) ajouter une seconde partie (A-2) du composé diisocyanate (A) et de l'isocyanate monofonctionnel au composé bisépoxyde (B) de l'étape (gamma) et copolymériser le mélange dans le réacteur.

11. Procédé selon l'une quelconque des revendications 8 à 10, dans lequel le mélange (alpha) ou le composé bisépoxyde (B) dans l'étape (gamma) comprend une seconde partie (C-2) du catalyseur (C).

12. Procédé selon l'une quelconque des revendications 8 à 11, dans lequel le composé bisépoxyde (B) comprend le prépolymère à base d'oxazolidinone à terminaison époxy.

13. Procédé selon l'une quelconque des revendications 1 à 11, dans lequel le procédé de copolymérisation continue est en l'absence d'un solvant (E).

14. Procédé selon l'une quelconque des revendications 1 à 12, dans lequel le réacteur est une extrudeuse à plusieurs vis co-rotatives telle qu'une extrudeuse à deux ou quatre vis ou une extrudeuse annulaire, un co-malaxeur, une extrudeuse à rouleaux planétaires, un système rotor-stator, un malaxeur à grand volume à un seul arbre ou un malaxeur à grand volume à deux arbres.

15. Procédé selon la revendication 14, dans lequel le réacteur est une extrudeuse à deux vis co-rotatives.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015173110 A1
- WO 2016128380 A1
- WO 2019052991 A1
- WO 2019052994 A1
- WO 2018149844 A1
- WO 2020016276 A1
- WO 2019063391 A1
- WO 9955772 A

**Non-patent literature cited in the description**

- **M. E. DYEN** ; **D. SWERN**. *Chem. Rev.*, 1967, vol. 67, 197
- *J. Polym. Sci.*, 1970, vol. 8, 2759-2773
- Plastics Additives Handbook. Hanser Publishers, 2000